# EUROPÄISCHE PATENTSCHRIFT

(11) **EP 0 450 620 B1**
(45) Veröffentlichungstag und Bekanntmachung des Hinweises auf die Patenterteilung: **30.11.1994**
(21) Anmeldenummer: 91105345.2
(22) Anmeldetag: 04.04.1991
(51) Int. Cl.: F16H 7/12

(54) **Automatischer Riemenspanner**
Automatic belt tensioner
Tendeur automatique de courroies

(30) Priorität: 04.04.1990 DE 4010928
(43) Veröffentlichungstag der Anmeldung: 09.10.1991
(73) Patentinhaber: Litens Automotive GmbH, W-6460 Gelnhausen 2 (DE)
(72) Erfinder: Guhr, Wolfgang, W-6457 Maintal 4 (DE); Fischer, Michael, W-8780 Fellen (DE); Rottstedt, Claus, W-6451 Hammersbach 1 (DE)
(74) Vertreter: Grünecker, Kinkeldey, Stockmair & Schwanhäusser Anwaltssozietät

(56) Entgegenhaltungen:
- EP-A- 0 188 077
- EP-A- 0 294 919
- DE-A- 3 728 158

## Beschreibung

Die Erfindung betrifft einen automatischen Riemenspanner, mit einem Basisteil und einem in bezug auf das Basisteil um eine gemeinsame Drehachse relativ gegeneinander drehbaren Spannteil, wobei das Basisteil oder das Spannteil mit einem Spannausleger verbunden ist, einer mit dem Basisteil oder Spannteil verbundenen Reibungsbuchse, einer auf der Reibungsbuchse aufsitzenden und unter Erzeugung einer Gleitreibung um die Achse der Reibungsbuchse drehbaren Federbuchse und einer die Federbuchse und Reibungsbuchse umgebenden Schraubenfeder, deren eines Ende an dem Basisteil und deren anderes Ende an dem Spannteil gesichert ist und die in einem axialen Bereich unter Erzeugung einer Reibungskraft zwischen der Federbuchse und der Reibungsbuchse gegen die Federbuchse anliegt.

Automatische Riemenspanner haben die Aufgabe in Riementriebsystemen die zur Kraftübertragung notwendige Riemenspannung über die gesamte Lebensdauer der Riemen ohne Nachstellung konstant zu halten. Darüber hinaus sollen automatische Riemenspanner für eine konstante Lagerbelastung der anzutreibenden Aggregate sorgen und Riemenschwingungen, die zu Schlupf und entsprechenden Schlupfgeräuschen führen, dämpfen.

Ein automatischer Riemenspanner der eingangs erwähnten Art ist aus der GB-A-2 102 097 bekannt. Bei diesem automatischen Riemenspanner wird eine Dämpfung von Schwingbewegungen des Spannauslegers des Riemenspanners dadurch erreicht, daß die Schraubenfeder so angeordnet wird, daß sie im wesentlichen mit der ersten Windung an dem dem Spannteil zugewandten Schraubenende im wesentlichen punktförmig gegen die Federbuchse anliegt, und dadurch zwischen der Federbuchse und der Reibungsbuchse eine dämpfende Reibungskraft erzeugt.

Durch punktförmige Anlage der Schraubenfeder an die Federbuchse kommt es in Umfangsrichtung der Reibungsbuchse nur zu einer unsymmetrischen, nur auf einen Teil des Umfangs beschränkten Reibungskraftverteilung, so daß die mit derartigen automatischen Riemenspannern erzielbaren Dämpfungsmomente +/- 15% der durch die Reimenspanner ausgeübten Spannmomente nicht überschreiten.

Es ist die Aufgabe der vorliegenden Erfindung, einen automatischen Riemenspanner der eingangs erwähnten Art vorzuschlagen, mit dem sich eine wesentlich wirksamere Dämpfung von Riemenschwingungen erreichen läßt.

Der zur Lösung dieser Aufgabe vorgeschlagene erfindungsgemäße Riemenspanner ist dadurch gekennzeichnet, daß die Federbuchse axial geschlitzt ist, und daß die Schraubenfeder die Federbuchse mit einer vorbestimmten Anzahl von Windungen unter Erzeugung einer gleichmäßigen radialen Schlingkraft umschlingt.

Durch diese erfindungsgemäße Lösung, bei der ein Teil der Schraubenfeder ständig unter Ausübung einer Schlingkraft die Federbuchse umschlingt und dadurch unter in Umfangsrichtung gleichmäßiger Verteilung der Reibungskraft zwischen der Federbuchse und der Reibungsbuchse ein hohes Drehmoment erzeugt, wird eine weitaus wirksamere Dämpfung mit Dämpfungsmomenten bis zu ±60% vom durch den automatischen Riemenspanner ausgeübten Spannmoment erreicht.

Die Dämpfung ist besonders wirksam, wenn die die Federbuchse umschlingenden Windungen in einem dem Spannteil zugewandten Endbereich der Schraubenfeder liegen.

In vorteilhafter Ausgestaltung der Erfindung kann vorgesehen sein, daß die Schlingkraft der Windungen über eine zwischen der Federbuchse und der Schraubenfeder angeordnete, axial geschlitzte Schlingbuchse übertragen wird, die gegen eine Verdrehung relativ zu dem Federring gesichert ist und aus einem Material besteht, das einen hohen Reibungskoeffizienten bei Paarung mit dem Federmaterial aufweist. Durch eine solche Schlingbuchse, die vorzugsweise aus Aluminium besteht, kann die Schlingkraft sehr gleichmäßig auf die Federbuchse und damit auf die Reibungsbuchse übertragen werden, wobei durch den hohen Reibungskoeffizienten dafür gesorgt wird, daß es nicht zu die Dämpfung mindernden Relativbewegungen zwischen der Schraubenfeder und der Schlingbuchse kommen kann. Die Schlingbuchse ist zweckmäßig so ausgebildet, daß wenigstens eine ihrer umlaufenden Randkanten entsprechend dem Verlauf der umschlingenden Federwindungen geneigt ist und eine der Ganghöhe der Schraubenfeder entsprechende Abstufung mit einer im wesentlichen axial verlaufenden Stufenflanke aufweist. Durch diese Ausbildung der Schlingbuchse wird, indem der Schraubenfederstrang die Stufenflanke etwa senkrecht schneidet, verhindert, daß der sich auf die Schlingbuchse windende Strang der Schraubenfeder von der Randkante der Schraubenfeder abrutschen kann.

Weitere vorteihafte Ausgestaltungsmöglichkeiten der Erfindung gehen aus den Unteransprüchen hervor. Die Erfindung soll nun anhand eines Ausführungsbeispiels und der sich auf dieses Ausführungsbeispiel beziehenden beiliegenden Zeichnungen weiter erläutert und beschrieben werden. Es zeigen:
- Fig.1: ein Ausführungsbeispiel für einen erfindungsgemäßen automatischen Riemenspanner (teilweise geschnitten),
- Fig.2: eine Ansicht von dem erfindungsgemäßen automatischen Riemenspanner gemäß der Fig. 1 in einer Ansicht gemäß der Schnittlinie A-A von Fig. 1,
- Fig.3: die bei dem erfindungsgemäßen automatischen Riemenspanner von Fig. 1 verwendete Schlingbuchse in einer Seitenansicht,
- Fig.4: die in der Fig. 3 gezeigte Schlingbuchse in einer Draufsicht,
- Fig.5: eine Darstellung zur Erläuterung des Prinzips der Dämpfung bei einem herkömmlichen automatischen Riemenspanner,
- Fig.6: eine Darstellung zur Erläuterung des Wirkprinzips der Dämpfung bei einem automatischen Riemenspanner nach der Erfindung, und
- Fig.7: eine Ansicht des erfindungsgemäßen Riemenspanners aus der in Fig. 2 mit "X" gekennzeichneten Richtung (ausschnittsweise).

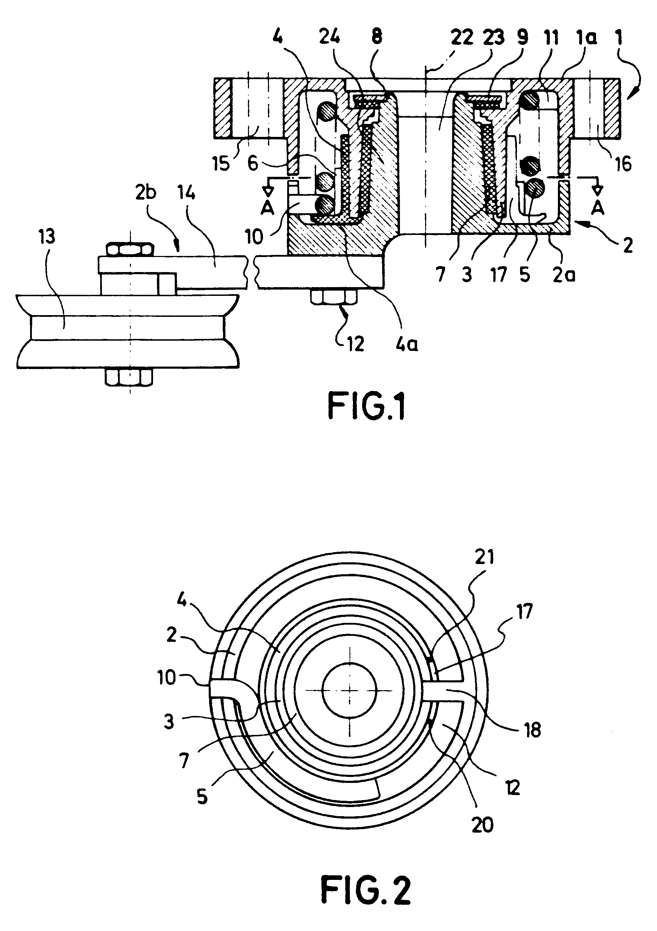

In der Fig. 1 ist mit dem Bezugszeichen 1 ein Basisteil bezeichnet, das über Befestigungslöcher 15 und 16 an einem Maschinenelement ortsfest befestigt werden kann. Auf dem Basisteil 1 ist ein Spannteil 2 drehbar gelagert, das mit einem Spannausleger 2b verbunden ist, der einen Hebel 14 und ein gegen einen zu spannenden Riemen anlegbares Laufrad 13 aufweist. Ein solcher Spannausleger könnte auch mit dem Basisteil verbunden sein. Der Spannausleger 2b ist über eine Schraube 12 mit dem Spannteil 2 verbunden. Mit 3 ist in der Fig. 1 eine mit dem Basisteil 1 im vorliegenden Ausführungsbeipiel einstückig ausgebildete, von einer Grundplatte 1a des Basisteils vorstehende Reibungsbuchse bezeichnet. Der äußere Durchmesser der Reibungsbuchse 3 verengt sich mit dem Abstand zur Grundplatte 1a, während sich der Innendurchmesser der Buchse 3 aufweitet. Durch diese Formgebung ist eine leichte Entformbarkeit gewährleistet, wenn das Basisteil 1 einstückig mit der vorstehenden Reibungsbuchse 3 als Gußteil hergestellt wird. Eine von einer Grundplatte 2a des Spannteils 2 vorstehende Hülse 24 mit einem Loch 23 um eine Drehachse 22 steht in die Reibungsbuchse 3 hinein, wobei zwischen der Reibungsbuchse 3 und der Hülse 24 eine Lagerbuchse 7 aus einem zur drehbaren Lagerung der vorstehenden Buchse 24 auf der Lagerbuchse 7 geeigneten Material vorgesehen ist. Nahe dem freien Endrand der Buchse 24 ist eine ringförmige Ausnehmung 8 vorgesehen, in die ein mit der Grundplatte 1a des Basisteils 1 verbundener Befestigungsring 9 hineinsteht, wodurch das Basisteil 1 und das Spannteil 2 zusammengehalten werden. Die Ringausnehmung 8 ist im vorliegenden Ausführungsbeispiel dadurch gebildet, daß der obere Endrand der Buchse 24 bei der Herstellung des Riemenspanners umgebördelt wird.

Auf der äußeren Mantelfläche der Reibungsbuchse 3 sitzt eine gegen die Reibungsbuchse 3 gleitend unter Erzeugung einer Reibungskraft anliegende Federbuchse 4 auf, die ein gegen die Grundplatte 2a des Spannteils anliegendes, zu den Buchsenmantelflächen im wesentlichen senkrechtes, einen Kragen bildendes Fußteil 4a aufweist, wobei das Fußteil 4a in einem radial nach innen vorstehenden Bereich eine ringförmige Ausnehmung aufweist, in die die Reibungsbuchse 3 mit ihrem freien Ende hineinsteht. Die Federbuchse 4 besteht vorzugsweise aus einem Kunststoffmaterial, das ein Schmiermittel enthält. Auf der Innenseite der Federbuchse sind in den Fig. 1 und 2 nicht sichtbare Schmiernuten für eine Einlaufschmierung vorgesehen. Die Federbuchse 4 ist von einer Schlingbuchse 6 umgeben, die im vorliegenden Ausführungsbeispiel aus Aluminium besteht und sich axial etwa über die Hälfte der Länge des axialen Teils der Federbuchse erstreckt. Die Schlingbuchse 6 kann auch aus Druckguß bestehen. Mit 5 ist eine zur Achse 22 im wesentlichen koaxiale Schraubenfeder bezeichnet, deren eines Strangende 10 gegen das Spannteil 2 und deren anderes Strangende 11 gegen das Basisteil 1 abgestützt ist. Die ersten beiden Windungen der Schraubenfeder an ihrem dem Spannteil 2 zugewandten axialen Ende umschlingen die Schlingbuchse 6, wobei die Windungen mit ihrer zur Achse 22 weisenden Innenseite in Umfangsrichtung gleichmäßig gegen die Schlingbuchse 6 anliegen. Der Außendurchmesser der Schlingbuchse im Einbauzustand ist größer als der Innendurchmesser der gegen die Schlingbuchse anliegenden Windungen der Schraubenfeder, wenn die Feder vollständig freiliegend einen Spannungszustand aufweist, der der minimalen Vorspannung der Feder im Einbauzustand entspricht. Die weiteren Windungen der Schraubenfeder 5 sind bis auf die letzte, die Grundplatte 1a des Basisteils 1 berührende Windung freiliegend.

Wie aus der Fig. 2 hervorgeht, weist die Federbuchse 4 einen in axialer Richtung verlaufenden durchgehenden Schlitz 18 und die Schlingbuchse 6 einen sich in axialer Richtung erstreckenden Ringausschnitt 19 auf. Die durch den Ringausschnitt 19 gebildeten Ränder 20 und 21 der Schlingbuchse stoßen gegen einen auf der äußeren Mantelfläche der Federbuchse 4 vorgesehenen Vorsprung 17 an, wodurch die Schlingbuchse 6 gegen eine Verdrehung relativ zu Federbuchse 4 gesichert ist.

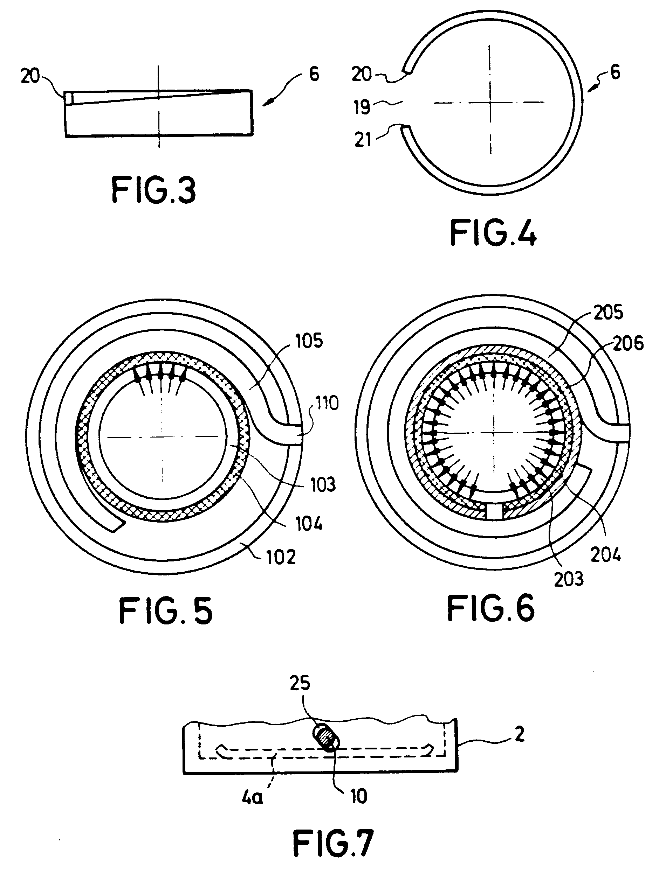

Aus der Fig. 7 geht hervor, daß das Ende 10 der Feder 5 in ein in dem Spannteil 2 vorgesehenes Langloch 25 hineinsteht.

Das Langloch 25 ist geneigt, so daß die gespannte Feder 5 gegen das Fußteil 4a der Federbuchse anliegt und die Federbuchse dadurch zwischen der Feder und dem Spannteil eingeklemmt ist.

Wie insbesondere aus den Fig. 3 und 4, in denen die Schlingbuchse 6 gesondert gezeigt ist, hervorgeht, steigt die dem Basisteil 1 zugewandte Randkante der Schlingbuchse 6 vom Rand 21 der Ausnehmung 19 zum Rand 20 der Ausnehmung 19 hin an, wobei der Anstieg der Windungssteigung der Schraubenfeder und der erreichte Höhenunterschied dem Ganghöhenunterschied der Schraubenfeder über die Umfangslänge der Schlingbuchse entspricht. Der Rand 20 wird von dem Strang der Schraubenfeder etwa senkrecht geschnitten. Würde die dem Basisteil 1 zugewandte Randkante der Schlingbuchse 3 nicht wie in der Fig. 3 gezeigt ausgebildet sein, sondern zum Beispiel parallel zur gegenüberliegenden Randkante verlaufen, so bestände die Gefahr, daß der Strang der Schraubenfeder von der Randkante, die er dann quer schneiden würde, abrutscht.

Im Betriebsfall ist die Feder 5 durch Verdrehung des Spannteils 2 gegen das Basisteil 1 um die Achse 22 vorgespannt, so daß der mit dem Spannteil 2 verbundene Spannausleger 2b auf einen Riemen, gegen den das Laufrad 13 des Spannauslegers 2a anliegt, eine Spannkraft ausübt. Die Vorspannung der Feder ist so gewählt, daß die Spannkraft auch dann noch ausreichend groß ist, wenn sich der Riemen im Laufe der Betriebsdauer verlängert hat, und der Spannausleger 2b dementsprechend unter Verdrehung des Spannteils 2 und unter Verminderung der Federspannung nachgeführt wurde. Dabei ist auch bei minimaler Federspannung gesichert, daß die von den die Schlingbuchse umgebenden Windungen ausgeübte Schlingkraft eine ausreichend hohe Reibungskraft zwischen der Federbuchse 6 und der Reibungsbuchse 3 erzeugt. Indem die gleichmäßig anliegenden Windungen insbesondere für eine in Umfangsrichtung gleichmäßige Riebungskraft sorgen, ist auch bei der kleinsten Federspannung ein hohes Dämpfungsmoment gewährleistet, das im vorliegenden Ausführungsbeispiel etwa ±40% vom ausgeübten Drehmoment beträgt, so daß eine sehr wirksame Dämpfung erreicht und ein Riemenflattern vermieden werden kann. Zwischen den die Schlingbuchse umschlingenden Windungen treten keine Relativbewgungen auf, da die Reibung zwischen der Feder und der Schlingbuchse stark im Vergleich zur Reibung zwischen der Federbuchse und der Reibungsbuchse ist. Über den Spannausleger 2b und das Spannteil 2 auf das dem Spannteil zugewandte Ende der Feder 5 übertragene, durch Bandflattern erzeugte Schwingbewegungen werden durch die Reibung zwischen der Federbuchse 6 und der Reibungsbuchse 3 wirksam gedämpft.

Anhand der Fig. 5 und 6 wird deutlich, warum durch die Erfindungslösung eine wirksamere Dämpfung als bei einem Treibriemenspanner nach dem Stand der Technik erzielt wird. Wie in der Fig. 5 gezeigt ist, wurde bei einem herkömmlichen Riemenspanner die Feder 105 so angeordnet, daß die erste Windung nach dem Federende 110, auf welches zu dämpfende, durch Riemenflattern erzeugte Schwingbewegungen des Spannauslegers bzw. Spannteils 102 übertragen werden, nur in einem engen, in der Fig. 5 durch Pfeile angedeuteten Bereich gegen die Federbuchse 103 anliegt. Dadurch wird nur ein verhältnismäßig geringes Dämpfungsmoment erzeugt. Bei der erfindungsgemäßen Lösung gemäß der Fig. 6 ergibt sich dagegen durch die Schlingkraft der Federwindungen der Feder 205 eine im Umfangsrichtung gleichmäßige Reibungskraft zwischen der Federbuchse 204 und der Reibungsbuchse 203, die zu einem hohen Dämpfungsmoment führt, das proportional zum Spannmoment ist und etwa bis zu 60% vom Spannmoment betragen kann.

Die in den Fig. 1 bis 4, sowie in der Fig. 6 gezeigte Schlingbuchse könnte auch einstückig mit der Federbuchse hergestellt sein, wobei durch eine entsprechende Materialauswahl gesichert sein muß, daß die Reibungskraft zwischen der Feder und der Federbuchse sehr hoch ist, so daß es im Schlingbereich nicht zu Relativbewegungen zwischen der Feder und der Buchse kommen kann, und daß die Festigkeit des Federbuchsenmaterials andererseits so hoch ist, daß die auf die Federbuchse ausgeübten Schlingkräfte sich über die Federbuchse möglichst gleichmäßig auf die Mantelfläche der Reibungsbuchse verteilen.

## Patentansprüche

1. Automatischer Riemenspanner, mit einem Basisteil (1) und einem in bezug auf das Basisteil um eine gemeinsame Drehachse (22) relativ gegeneinander drehbaren Spannteil (2), wobei das Basisteil (1) oder das Spannteil (2) mit einem Spannausleger (2b) verbunden ist, einer mit dem Basisteil (1) oder Spannteil (2) verbundenen Reibungsbuchse (3), einer auf der Reibungsbuchse (3) aufsitzenden und unter Erzeugung einer Gleitreibung um die Achse (22) der Reibungsbuchse drehbaren Federbuchse (4) und einer die Federbuchse (4) und Reibungsbuchse (3) umgebenden Schraubenfeder (5), deren eines Ende an dem Basisteil (1) und deren anderes Ende an dem Spannteil (2) gesichert ist und die in einem axialen Bereich unter Erzeugung einer Reibungskraft zwischen der Federbuchse (4) und der Reibungsbuchse (3) gegen die Federbuchse (4) anliegt, **dadurch gekennzeichnet**, daß die Federbuchse (4) axial geschlitzt ist, und daß die Schraubenfeder (5) die Federbuchse (4) mit einer vorbestimmten Anzahl von Windungen unter Erzeugung einer gleichmäßigen radialen Schlingkraft umschlingt.

2. Riemenspanner nach Anspruch 1, **dadurch gekennzeichnet**, daß die die Federbuchse (4) umschlingenden Windungen in einem dem Spannteil (2) zugewandten Endbereich der Schraubenfeder (5) liegen.

3. Riemenspanner nach Anspruch 1 oder 2, **dadurch gekennzeichnet**, daß die Schlingkraft der Windungen über eine zwischen der Federbuchse (4) und der Schraubenfeder (5) angeordnete geschlitzte Schlingbuchse (6) übertragen wird.

4. Riemenspanner nach Anspruch 3, **dadurch gekennzeichnet**, daß die Schlingbuchse (6) gegen eine Verdrehung relativ zur Federbuchse (4) gesichert ist.

5. Riemenspanner nach Anspruch 4, **dadurch gekennzeichnet**, daß die Schlingbuchse (6) durch wenigstens einen an der Federbuchse (4) vorgesehenen Anschlag (17) gesichert ist.

6. Riemenspanner nach einem der Ansprüche 3 bis 5, **dadurch gekennzeichnet**, daß der Außendurchmesser der Federbuchse (4) bzw. der Schlingbuchse (6) im eingebauten Zustand größer als der Innendurchmesser der umschlingenden Windungen bei geringster Vorspannung der Feder (5) im eingebauten Zustand ist.

7. Riemenspanner nach einem der Ansprüche 3 bis 6, **dadurch gekennzeichnet**, daß wenigstens eine der umlaufenden Randkanten der Schlingbuchse (6) im wesentlichen entsprechend dem Verlauf der Federwindung geneigt ist und einen der Schraubenganghöhe ensprechenden Absatz aufweist.

8. Riemenspanner nach einem der Ansprüche 3 bis 7, **dadurch gekennzeichnet**, daß die Schlingbuchse (6) aus einem Material mit einem hohen Reibungskoeffizienten bei Paarung mit dem Federmaterial besteht.

9. Riemenspanner nach einem der Ansprüche 3 bis 8, **dadurch gekennzeichnet**, daß die Schlingbuchse (6) aus einem verhältnismäßig weichen Material besteht.

10. Riemenspanner nach Anspruch 9, **dadurch gekennzeichnet**, daß die Schlingbuchse (6) aus Druckguß besteht.

11. Riemenspanner nach einem der Ansprüche 1 bis 10, **dadurch gekennzeichnet**, daß die Federbuchse (4) auf ihrer der Reibungsbuchse (3) zugewandten Mantelfläche Schmierungsnuten aufweist.

12. Riemenspanner nach einem der Ansprüche 1 bis 11, **dadurch gekennzeichnet**, daß die Federbuchse (4) aus einem Kunststoff besteht.

13. Riemenspanner nach einem der Ansprüche 1 bis 12, **dadurch gekennzeichnet**, daß die Federbuchse (4) aus einem Schmiermittel enthaltenden Material besteht.

14. Riemenspanner nach einem der Ansprüche 1 bis 13, **dadurch gekennzeichnet**, daß die Federbuchse (4) einen Kragen (4a) aufweist, gegen den ein Ende der Schraubenfeder (5) zur Anlage kommt.

## Claims

1. Automatic belt tensioner, with a base portion (1) and a tensioning portion (2) which is relatively rotatable in relation to the base portion about a common axis of rotation (22), wherein the base portion (1) or the tensioning portion (2) is connected to a tensioning arm (2b), a friction bush (3) connected to the base portion (1) or tensioning portion (2), a spring bush (4) mounted on the friction bush (3) and rotatable about the axis (22) of the friction bush, producing sliding friction, and a coil spring (5) which surrounds the spring bush (4) and friction bush (3) and of which one end is secured to the base portion (1) and the other end to the tensioning portion (2) and which abuts against the spring bush (4) in an axial region, producing a frictional force between the spring bush (4) and the friction bush (3), characterised in that the spring bush (4) is axially slotted, and in that the coil spring (5) wraps around the spring bush (4) with a predetermined number of turns, producing a uniform radial wrap-around force.

2. Belt tensioner according to claim 1, characterised in that the turns wrapping around the spring bush (4) are located in an end region of the coil spring (5) facing towards the tensioning portion (2).

3. Belt tensioner according to claim 1 or 2, characterised in that the wrap-around force of the turns is transmitted via a slotted wrap-around bush (6) arranged between the spring bush (4) and the coil spring (5).

4. Belt tensioner according to claim 3, characterised in that the wrap-around bush (6) is secured against rotation relative to the spring bush (4).

5. Belt tensioner according to claim 4, characterised in that the wrap-around bush (6) is secured by at least one stop (17) provided on the spring bush (4).

6. Belt tensioner according to any of claims 3 to 5, characterised in that the outside diameter of the spring bush (4) or of the wrap-around bush (6) in the fitted state is greater than the inside diameter of the wrap-around turns with minimum initial tension of the spring (5) in the fitted state.

7. Belt tensioner according to any of claims 3 to 6, characterised in that at least one of the peripheral edges of the wrap-around bush (6) is inclined essentially according to the path of spring winding and comprises a shoulder corresponding to the convolution height.

8. Belt tensioner according to any of claims 3 to 7, characterised in that the wrap-around bush (6) is made of a material with a high coefficient of friction, with pairing with the spring material.

9. Belt tensioner according to any of claims 3 to 8, characterised in that the wrap-around bush (6) is made of a relatively soft material.

10. Belt tensioner according to claim 9, characterised in that the wrap-around bush (6) is made of diecast material.

11. Belt tensioner according to any of claims 1 to 10, characterised in that the spring bush (4) comprises lubrication grooves on its peripheral surface facing towards the friction bush (3).

12. Belt tensioner according to any of claims 1 to 11, characterised in that the spring bush (4) is made of a plastic.

13. Belt tensioner according to any of claims 1 to 12, characterised in that the spring bush (4) is made of a lubricant-containing material.

14. Belt tensioner according to any of claims 1 to 13, characterised in that the spring bush (4) comprises a collar (4a) against which one end of the coil spring (5) comes into abutment.

## Revendications

1. Tendeur automatique de courroies, avec une partie de base (1) et une partie tendeuse (2) pouvant tourner par rapport à la partie de base, autour d'un axe de rotation (22) commun, la partie de base (1) ou la partie tendeuse (2) étant reliée à un bras tendeur (2b), avec une douille de friction (3) reliée à la partie de base (1) ou à la partie tendeuse (2), une douille à ressort (4) reposant sur la douille de friction (3) et pouvant tourner autour de l'axe (22) de la douille de friction en produisant un frottement de glissement et un ressort hélicoïdal (5) entourant la douille à ressort (5) et la douille de friction (3), ressort dont une extrémité est fixée sur la partie de base (1) et l'autre extrémité est fixée sur la partie tendeuse (2) et qui appuie contre la douille à ressort (4), dans une zone axiale, en produisant une force de friction entre la douille à ressort (4) et la douille de friction (3), caractérisé en ce que la douille à ressort (4) est fendue axialement et en ce que le ressort hélicoïdal (5) enlace la douille à ressort (4) avec un nombre prédéterminé de spires, en produisant une force d'enlacement radiale régulière.

2. Tendeur de courroies selon la revendication 1, caractérisé en ce que les spires enlaçant la douille à ressort (4) sont situées dans une zone d'extrémité, tournée vers la partie tendeuse (2), du ressort hélicoïdal (5).

3. Tendeur de courroies selon la revendication 1 ou 2, caractérisé en ce que la force d'enlacement des spires est transmise par l'intermédiaire d'une douille d'enlacement (5) fendue, disposée entre la douille à ressort (4) et le ressort hélicoïdal (5).

4. Tendeur de courroies selon la revendication 3, caractérisé en ce que la douille d'enlacement (6) est fixée pour empêcher toute rotation par rapport à la douille à ressort (4).

5. Tendeur de courroies selon la revendication 4, caractérisé en ce que la douille d'enlacement (6) est fixée à l'aide d'au moins une butée (17) prévue sur la douille à ressort (4).

6. Tendeur de courroies selon l'une des revendications 3 à 5, caractérisé en ce que le diamètre extérieur de la douille à ressort (4), respectivement de la douille d'enlacement (6), à l'état monté, est supérieur au diamètre intérieur des spires produisant l'enlacement, ceci pour la précontrainte minimale du ressort (5), à l'état monté.

7. Tendeur de courroies selon l'une des revendications 3 à 6, caractérisé en ce qu'au moins l'une des arêtes marginales de pourtour de la douille d'enlacement (6) est inclinée sensiblement de manière correspondante à l'allure de la spire d'enroulement du ressort et présente un décrochement correspondant à la valeur du pas de l'hélice.

8. Tendeur de courroies selon l'une des revendications 3 à 7, caractérisé en ce que la douille d'enlacement (6) est composée en un matériau présentant un coefficient de friction élevé lors de l'appairage avec le matériau du ressort.

9. Tendeur de courroies selon l'une des revendications 3 à 8, caractérisé en ce que la douille d'enlacement (6) est composée en un matériau relativement souple.

10. Tendeur de courroies selon la revendication 9, caractérisé en ce que la douille d'enlacement (6) est réalisée par moulage sous pression.

11. Tendeur de courroies selon l'une des revendications 1 à 10, caractérisé en ce que la douille à ressort (4) présente des gorges de lubrification sur sa surface d'enveloppe tournée vers la douille de friction (3).

12. Tendeur de courroies selon l'une des revendications 1 à 11, caractérisé en ce que la douille à ressort (4) est réalisée en matière synthétique.

13. Tendeur de courroies selon l'une des revendications 1 à 12, caractérisé en ce que la douille à ressort (4) est composée en un matériau contenant un lubrifiant.

14. Tendeur de courroies selon l'une des revendications 1 à 3, caractérisé en ce que la douille à ressort (4) présente une collerette (4a), contre laquelle une extrémité du ressort hélicoïdal (5) vient en appui.
